(19) **Europäisches Patentamt**
**European Patent Office**
**Office européen des brevets**

(11) **EP 4 020 906 A1**

(12) **EUROPEAN PATENT APPLICATION**
published in accordance with Art. 153(4) EPC

(43) Date of publication:
**29.06.2022 Bulletin 2022/26**

(21) Application number: **20855709.0**

(22) Date of filing: **28.07.2020**

(51) International Patent Classification (IPC):
***H04L 12/70*** *(2013.01)*   ***G06F 21/55*** *(2013.01)*

(52) Cooperative Patent Classification (CPC):
**G06F 21/55**

(86) International application number:
**PCT/JP2020/028939**

(87) International publication number:
**WO 2021/033506 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.08.2019   JP 2019150912**

(71) Applicant: **Hitachi, Ltd.
Tokyo 100-8280 (JP)**

(72) Inventors:
• **NISHIJIMA, Katsuya
  Tokyo 100-8280 (JP)**
• **SHIGEMOTO, Tomohiro
  Tokyo 100-8280 (JP)**
• **KITO, Tetsuro
  Tokyo 100-8280 (JP)**

(74) Representative: **Mewburn Ellis LLP
Aurora Building
Counterslip
Bristol BS1 6BX (GB)**

(54) **NETWORK MONITORING DEVICE, NETWORK MONITORING METHOD, AND STORAGE MEDIUM HAVING NETWORK MONITORING PROGRAM STORED THEREON**

(57)     In a network monitoring device 100, a CPU 102 detects an increase point of a darknet traffic and calculates, with regard to a darknet traffic corresponding to the increase point, an evaluation value indicating priority of a countermeasure against a cyberattack based on whether or not one or more of the following conditions are met: the darknet traffic has been detected inside a user organization; a correlation score of a darknet traffic between an observation point and the user organization is equal to or more than a threshold; a transmission source IP address is included in a blacklist; the darknet traffic is included in threat intelligence as attack information; a corresponding log is included in a honeypot; the honeypot including the log is included in the user organization; a CVSS score of a target is equal to or more than a threshold; and there is a product having vulnerability inside the user organization.

FIG. 1

## Description

Technical Field

The present invention relates to a technology for monitoring cyberattacks on networks.

Background Art

In recent years, companies and countries have been threatened by large-scale and advanced cyberattacks represented by large-scale infection due to ransomware or IoT (Internet of things) botnets. In order to prevent cyberattacks in advance, it is important to recognize signs of a cyberattack and take measures before the user organization undergoes the cyberattack. From the background described above, it has been demanded to collect/analyze attack information regarding vulnerability scanning or infection activity, for example, to thereby take countermeasures in advance.

For example, Patent literature 1 discloses a system configured to, in order to facilitate cyberattack analysis, collect information regarding a plurality of types of cyberattacks and evaluate, on the basis of feature information regarding the cyberattacks, the number of types of cyberattacks in which the cyberattack feature information appears.

Citation List

Patent Literature

Patent Literature 1: JP-2018-196054-A

Summary of Invention

Technical Problem

With the use of the technology of Patent Document 1, the number of types of cyberattacks regarding which cyberattack feature information (element) has been observed can be recognized. However, the technology of Patent Document 1 has a risk that attacks are launched before information organized by STIX (Structured Threat Information eXpression) or the like is shared. Further, it is not easy to recognize which obtained cyberattack information is to be dealt with preferentially.

The present invention has been made in view of the circumstances described above and has an object to provide a technology capable of appropriately detecting the signs of cyberattacks and appropriately calculating the priority of countermeasures against the detected cyberattacks.

Solution to Problem

In order to achieve the above-mentioned object, according to an aspect, there is provided a network monitoring device including a processor unit and configured to monitor a cyberattack on a network. The processor unit is configured to detect an increase point of a darknet traffic on the network and calculate, with regard to a darknet traffic corresponding to the detected increase point, an evaluation value indicating priority of a countermeasure against a cyberattack based on whether or not one or more of the following conditions are met: the darknet traffic has been detected inside a user organization that is an organization to which the network monitoring device belongs; a correlation score indicating relevance of a darknet traffic between an observation point at which the darknet traffic corresponding to the increase point has been observed and the user organization is equal to or more than a threshold; a transmission source IP address is included in a blacklist; the darknet traffic is included in threat intelligence as attack information; a log corresponding to the darknet traffic is included in a honeypot configured to respond to an access; the honeypot including the log is a honeypot inside the user organization; a CVSS (Common Vulnerability Scoring System) score of vulnerability of a target of the darknet traffic is equal to or more than a threshold; and there is a product having vulnerability as the target inside the user organization.

Details of at least one embodiment of a subject matter disclosed herein are set forth in the accompanying drawings and the following description. Other features, aspects, and effects of the disclosed subject matter will be apparent from the following disclosure, drawings, and claims.

Advantageous Effects of Invention

According to the present invention, the signs of cyberattacks can be appropriately detected and the priority of countermeasures against the detected cyberattacks can be appropriately calculated.

Brief Description of the Drawings

FIG. 1 is a diagram illustrating an entire configuration example of a computer system according to an embodiment.
FIG. 2 is a diagram illustrating an example of change point detection data according to the embodiment.
FIG. 3 is a diagram illustrating an example of product port data according to the embodiment.
FIG. 4 is a diagram illustrating an example of honeypot log data according to the embodiment.
FIG. 5 is a diagram illustrating an example of cyber threat intelligence data according to the embodiment.
FIG. 6 is a diagram illustrating an example of vulnerability data according to the embodiment.
FIG. 7 is a diagram illustrating an example of configuration data according to the embodiment.
FIG. 8 is a diagram illustrating an example of IP blacklist data according to the embodiment.
FIG. 9 is a diagram illustrating an example of correlation score data according to the embodiment.
FIG. 10 is an example of a flowchart of countermeasure priority score presentation processing according to the embodiment.
FIG. 11 is an example of a sequence diagram of change point score calculation processing according to the embodiment.
FIG. 12 is an example of a flowchart of countermeasure priority score calculation processing according to the embodiment.
FIG. 13 is a diagram illustrating an example of a countermeasure priority score presentation screen according to the embodiment.
FIG. 14 is a diagram illustrating an example of a score details screen according to the embodiment.
FIG. 15 is a diagram illustrating an example of a detailed information presentation screen according to the embodiment.

Description of Embodiments

In order to deal with threats such as ransomware and IoT botnets, it is important to analyze darknet traffics to recognize the signs of cyberattacks and take measures before the user organization undergoes the cyberattacks. However, only from the darknet traffics, causes and effects of the attacks cannot be clarified, and hence, which event is to be dealt with preferentially cannot be determined. Thus, in the present embodiment, various types of information collected in advance are checked against the detected signs of attacks to achieve early detection of the attacks and calculation of the priority of countermeasures (countermeasure priority) against the attacks. With this, an observer can take countermeasures for more important events preferentially.

In the following, the embodiment is described with reference to the drawings. Note that the embodiment described below is not intended to limit the invention as set forth in the appended claims, and all elements and combinations thereof described in the embodiment are not necessarily essential to solutions proposed by the invention.

In the following description, information is sometimes described using an expression "AAA data," but the information may be expressed using any kind of data structure. That is, "AAA data" can also be called "AAA information" in order to indicate that the information is independent of data structure.

Further, in the following description, a "processor unit" includes one or more processors. The at least one processor is typically a microprocessor such as a CPU (Central Processing Unit). The one or more processors may each be a single or multi-core processor.

Further, in the following description, the description of processing sometimes uses a "program" as the actor. The program is, however, executed by the processor unit to perform predetermined processing using at least one of a storage unit and an interface unit appropriately, and hence, the processor unit (or a computer or computer system including the processor unit) may be regarded as the subject of the processing. The program may be installed in the computer from a program source. The program source may be, for example, a program distribution server or a computer readable storage medium. Further, in the following description, two or more programs may be implemented as one program, or one program may be implemented as two or more programs. Further, at least part of the processing that is implemented by the program being executed may be implemented by a hardware circuit (for example, ASIC (Application Specific Integrated Circuit) or FPGA (Field-Programmable Gate Array)).

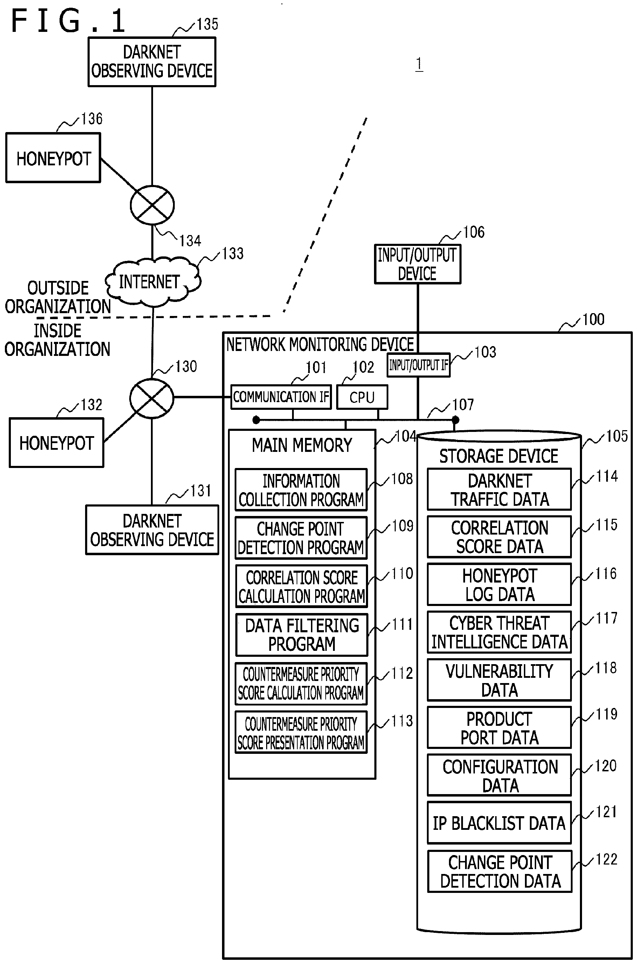

FIG. 1 is a diagram illustrating an entire configuration example of a computer system according to the embodiment.

A computer system 1 includes a network monitoring device 100, a darknet observing device 131, a honeypot 132, a darknet observing device 135, and a honeypot 136.

The network monitoring device 100, the darknet observing device 131, and the honeypot 132 are installed inside a certain organization and connected to each other via a network 130 inside the organization. The network 130 is, for example, a wired LAN (Local Area Network) or a wireless LAN.

The darknet observing device 135 and the honeypot 136 are installed outside the organization to which the network monitoring device 100 belongs (outside organization) and are connected to each other via a network 134. The network 134 is, for example, a wired LAN or a wireless LAN.

The network 130 and the network 134 are connected to each other via an Internet 133. Thus, the network monitoring device 100 can communicate with the darknet observing device 135 and the honeypot 136 via the network 130, the Internet 133, and the network 134. Note that various computers, which are not illustrated, are connected to the Internet 133.

The darknet observing device 131 observes, for example, traffics to a darknet (darknet traffic) with which IP packets can arrive at the device in question. Here, a darknet is an address space, to which no specific host is assigned, of IP addresses on the Internet at which IP packets can arrive. The darknet observing device 131 can receive IP packets to an address space in the darknet inside the organization.

The darknet observing device 135 observes, for example, traffics to a darknet with which IP packets can arrive at the device in question. The darknet observing device 135 can receive IP packets to an address space in the darknet existing on the Internet inside an organization to which the darknet observing device 135 belongs.

The honeypot 132 and the honeypot 136 are cyberattack decoy devices. The honeypot 132 and the honeypot 136 receive IP packets addressed to the devices in question and return responses to the IP packets.

The network monitoring device 100 includes a communication interface (communication IF) 101, a CPU 102 that is an example of the processor unit, an input/output interface (input/output IF) 103, a main memory 104, a storage device 105, and a communication path 107 connecting the units 101 to 105 to each other.

The communication path 107 is an information transmission medium, for example, a bus or a cable.

The communication IF 101 is an interface, for example, a wired LAN card or a wireless LAN card, and communicates with other devices (for example, honeypots 132 and 136 and darknet observing devices 131 and 135) via the network 130, the Internet 133, and the network 134. The input/output IF 103 is connected to an input/output device 106 for input/output, such as a keyboard or a display, and mediates input/output of data.

The main memory 104 is, for example, a RAM (Random Access Memory) and stores programs that are executed by the CPU 102 and necessary data. In the present embodiment, the main memory 104 stores an information collection program 108, a change point detection program 109, a correlation score calculation program 110, a data filtering program 111, a countermeasure priority score calculation program 112, and a countermeasure priority score presentation program 113.

The CPU 102 executes various types of processing in accordance with the programs stored in the main memory 104 and/or the storage device 105.

The CPU 102 executes the information collection program 108 to perform processing of collecting data including darknet traffic data, honeypot log data, cyber threat intelligence data, vulnerability data, product port data, configuration data, and IP blacklist data and storing the data in the storage device 105. The CPU 102 executes the change point detection program 109 to perform processing of detecting a change point of darknet traffic data.

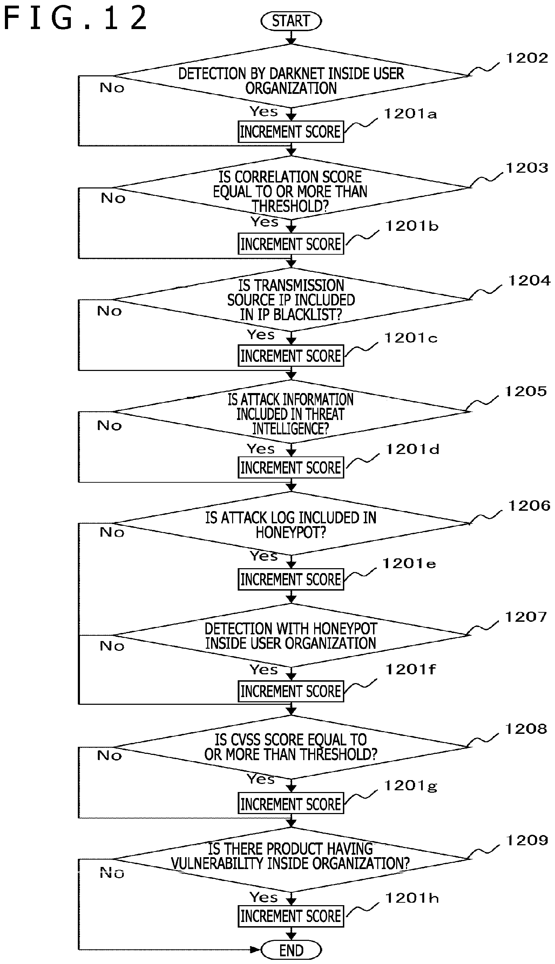

The CPU 102 executes the correlation score calculation program 110 to perform processing of calculating a correlation score of a darknet traffic between another organization and the user organization. The CPU 102 executes the data filtering program 111 to perform processing of checking change point detection data against various types of data. The CPU 102 executes the countermeasure priority score calculation program 112 to perform processing of calculating a countermeasure priority score (countermeasure priority score calculation processing: see FIG. 12). The CPU 102 executes the countermeasure priority score presentation program 113 to perform processing of presenting a countermeasure priority score to an observer who uses the network monitoring device 100.

The storage device 105 is, for example, an HDD (hard disk drive) or an SSD (solid-state drive) and stores the programs that are executed by the CPU 102 and data that is utilized by the CPU 102.

In the present embodiment, the storage unit 105 stores darknet traffic data 114, correlation score data 115, honeypot log data 116, cyber threat intelligence data 117, vulnerability data 118, product port data 119, configuration data 120, IP blacklist data 121, and change point detection data 122.

The darknet traffic data 114 is data obtained from the darknet observing device 131 inside the organization and the darknet observing device 135 outside the organization. The correlation score data 115 is data on a correlation score of darknet traffic data between inside and outside the organization calculated by the correlation score calculation program 110. The honeypot log data 116 is data obtained from the honeypot 132 inside the organization and the honeypot 136 outside the organization. The cyber threat intelligence data 117 is data provided by security researchers or the like. The vulnerability data 118 is data provided by public institutions or the like. The product port data 119 is data indicating correspondence between a name of a product and a port utilized by the product. The configuration data 120 is data on a name of a product inside the organization and a version of the product. The IP blacklist data 121 is data in which high-risk IP addresses are listed (as blacklist). The change point detection data 122 is data in which events indicating detection of change points of darknet traffics are listed.

The programs and data described above may be stored in the main memory 104 or the storage device 105 in advance or may be installed (or loaded) as needed from the input/output device 106 via the input/output IF 103 or from another device via the communication IF 101.

Next, details of the various types of data stored in the storage device 105 are described.

The darknet traffic data 114 includes entries corresponding to IP packets received (observed) by each of the darknet observing devices 131 and 135. An entry of the darknet traffic data 114 includes, for example, a darknet observing device ID, a destination Port/protocol, a detection time, and a transmission source IP. The darknet observing device ID indicates an ID of a darknet observing device that has received an IP packet and corresponds to the entry. The destination Port/protocol indicates a port and a protocol of a destination of an IP packet. The detection time indicates a time at which an IP packet has been received. The transmission source IP indicates an IP address of a transmission source of an IP packet.

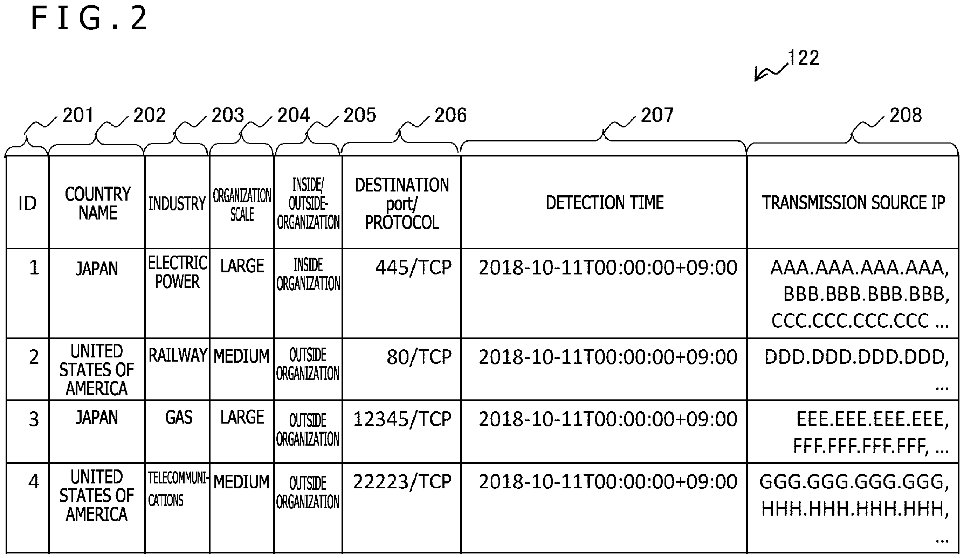

FIG. 2 is a diagram illustrating an example of the change point detection data according to the embodiment.

The change point detection data 122 includes entries in which events (events: attacks or signs of attacks) indicating detection of change points of darknet traffics are summarized. An entry of the change point detection data 122 includes an ID 201, a country name 202, an industry 203, an organization scale 204, inside/outside-organization 205, a destination port/protocol 206, a detection time 207, and a transmission source IP 208.

The ID 201 indicates an identifier that allows each entry of the change point detection data 122 to be uniquely identified. The country name 202 indicates a name of a country in which a darknet observing device that has detected a change point is installed. The industry 203 indicates an industry corresponding to an organization in which a darknet observing device that has detected a change point is installed. The organization scale 204 indicates a scale of an organization (organization scale) in which a darknet observing device that has detected a change point is installed. The inside/outside-organization 205 indicates whether a darknet observing device that has detected a change point is installed inside or outside an organization to which the network monitoring device 100 belongs. The destination port/protocol 206 indicates a destination port number and a protocol in a darknet traffic. The detection time 207 indicates a time at which a change point has been detected. The transmission source IP 208 indicates an IP address of a transmission source of a darknet traffic (transmission source IP address: sometimes referred to as transmission source IP).

Note that the transmission source IP 208 may include all the transmission source IP addresses of IP packets of darknet traffics or some of top transmission source IP addresses obtained as a result of sorting in descending order in terms of the number of accesses.

The change point detection data 122 is utilized in the processing that the correlation score calculation program 110 performs to calculate a correlation score, and in the processing that the countermeasure priority score calculation program 112 performs to calculate a countermeasure priority score. Specific processing of the countermeasure priority score calculation program 112 is described later with reference to FIG. 12.

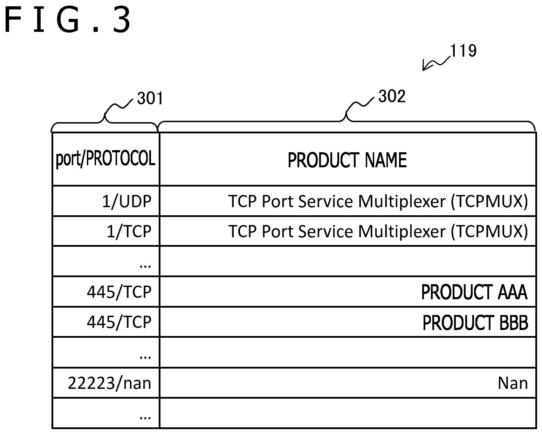

FIG. 3 is a diagram illustrating an example of the product port data according to the embodiment.

The product port data 119 is data for determining a product name from a port number and a protocol. An entry of the product port data 119 includes a port/protocol 301 and a product name 302. The port/protocol 301 indicates a port number and protocol information. The product name 302 indicates the name of a product that utilizes the port/protocol 301 in an entry.

In the product port data 119, a plurality of product names may be associated with the same port/protocol. Each entry of the product port data 119 may regularly be collected/updated by the information collection program 108 or may be input or updated by the observer as needed.

The product port data 119 is used in the processing that the countermeasure priority score calculation program 112, which is executed by the CPU 102, performs to calculate a countermeasure priority score. Specific processing of the countermeasure priority calculation program 112 is described later with reference to FIG. 12.

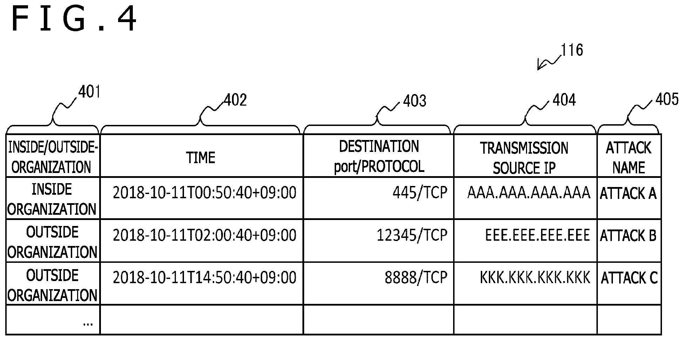

FIG. 4 is a diagram illustrating an example of the honeypot log data according to the embodiment.

An entry of the honeypot log data 116 includes inside/outside-organization 401, a time 402, a destination port/protocol 403, a transmission source IP 404, and an attack name 405. The inside/outsideorganization 401 indicates whether a honeypot is installed inside or outside the organization. The time 402 indicates a timestamp indicating when a honeypot log is generated. The destination port/protocol 403 indicates a destination port and a protocol of an IP packet transmitted to a honeypot. The transmission source IP 404 indicates a transmission source IP address in a honeypot log, that is, an IP address of a transmission source of an IP packet to a honeypot. The attack name 405 indicates a specific name of an attack to a honeypot. Note that the honeypot log data 116 is regularly collected/updated by the information collection program 108.

The honeypot log data 116 is used in the processing that the countermeasure priority score calculation program 112 performs to calculate a countermeasure priority score. Specific processing of the countermeasure priority calculation program 112 is described later with reference to FIG. 12.

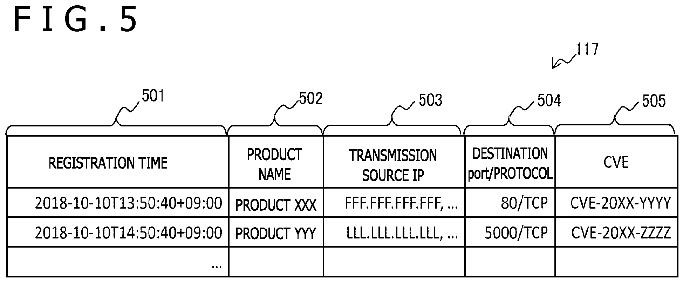

FIG. 5 is a diagram illustrating an example of the cyber threat intelligence data according to the embodiment.

An entry of the cyber threat intelligence data 117 includes a registration time 501, a product name 502, a transmission source IP 503, a destination port/protocol 504, and a CVE (Common Vulnerabilities and Exposures) 505.

The registration time 501 indicates a time at which data corresponding to an entry has been registered. The product name 502 indicates a name of a product that is a target of an attack. The transmission source IP 503 indicates an IP address of a connection source of an attack. The destination port/protocol 504 indicates a port number and a protocol of an attack target. The CVE 505 indicates a CVE number of vulnerability utilized by an attack.

Note that each entry of the cyber threat intelligence data 117 may regularly be collected/updated by the information collection program 108 or may be input or updated by the observer as needed.

The cyber threat intelligence data 117 is used in the processing that the countermeasure priority score calculation program 112 performs to calculate a countermeasure priority score. Specific processing of the countermeasure priority calculation program 112 is described later with reference to FIG. 12.

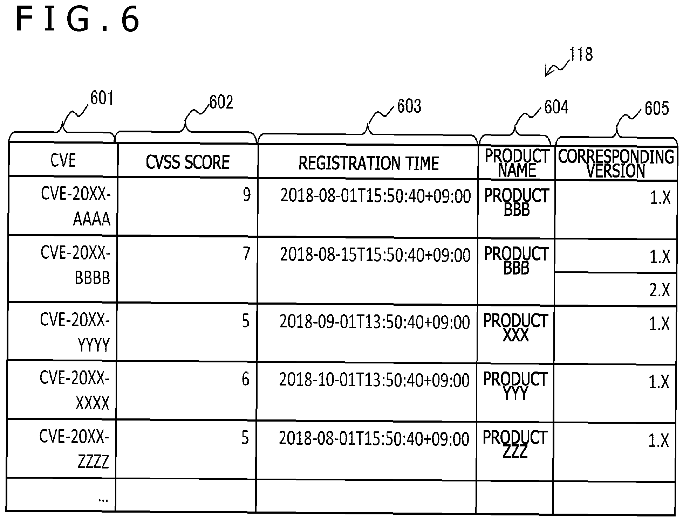

FIG. 6 is a diagram illustrating an example of the vulnerability data according to the embodiment.

An entry of the vulnerability data 118 includes a CVE 601, a CVSS score 602, a registration time 603, a product name 604, and a corresponding version 605.

The CVE 601 indicates a CVE. The CVSS score 602 indicates a CVSS score corresponding to the CVE 601 of an entry. The registration time 603 indicates a time at which a CVE has been registered. The product name 604 indicates a name of a product (product name) corresponding to the CVE 601. The corresponding version 605 indicates a version of a product corresponding to the CVE 601.

Note that each entry of the vulnerability data 118 may regularly be collected/updated by the information collection program 108 or may be input or updated by the observer as needed.

The vulnerability data 118 is used in the processing that the countermeasure priority score calculation program 112 performs to calculate a countermeasure priority score. Specific processing of the countermeasure priority score calculation program 112 is described later with reference to FIG. 12.

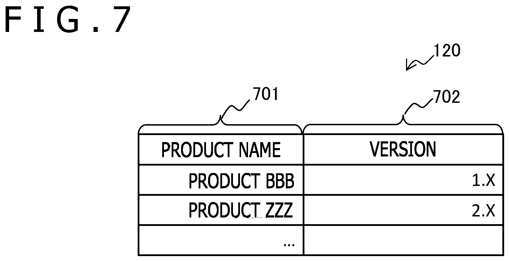

FIG. 7 is a diagram illustrating an example of the configuration data according to the embodiment.

Each entry of the configuration data 120 includes a product name 701 and a version 702. The product name 701 indicates a product name of a product introduced in the organization. The version 702 indicates a version of the product name 701 of an entry.

Note that each entry of the configuration data 120 may regularly be collected/updated by the information collection program 108 or may be input or updated by the observer as needed.

The configuration data 120 is utilized in the processing that the countermeasure priority score calculation program 112 performs to calculate a countermeasure priority score. Specific processing of the countermeasure priority score calculation program 112 is described later with reference to FIG. 12.

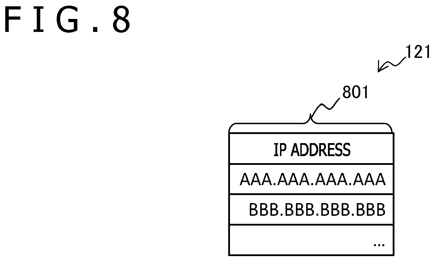

FIG. 8 is a diagram illustrating an example of the IP blacklist data according to the embodiment.

An entry of the IP blacklist data 121 includes an IP address 801. The IP address 801 indicates an IP address that conducts an attack with high possibility.

Note that each entry of the IP blacklist data 121 may regularly be collected/updated by the information collection program 108 or may be input or updated by the observer as needed.

The IP blacklist data 121 is used in the processing that the countermeasure priority score calculation program 112 performs to calculate a countermeasure priority score. Specific processing of the countermeasure priority score calculation program 112 is described later with reference to FIG. 12.

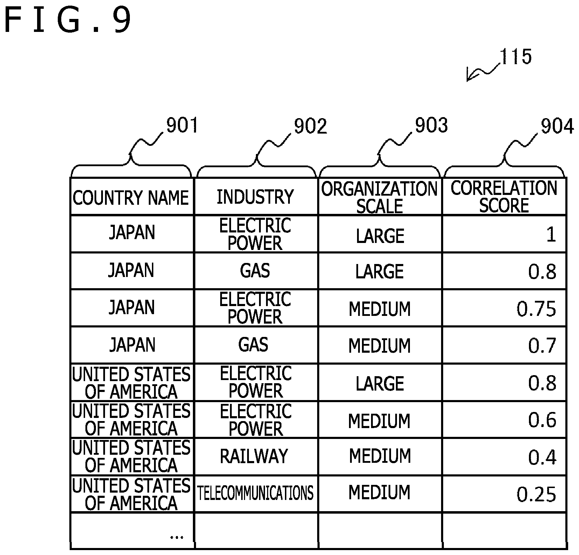

FIG. 9 is a diagram illustrating an example of the correlation score data according to the embodiment.

An entry of the correlation score data 115 includes a country name 901, an industry 902, an organization scale 903, and a correlation score 904. The country name 901 indicates a name of a country in which there is a darknet observing device for which a correlation score is to be calculated. The industry 902 indicates an industry of an organization in which a darknet observing device for which a correlation score is to be calculated is installed. The organization scale 903 indicates a scale of an organization in which a darknet observing device for which a correlation score is to be calculated is installed. The correlation score 904 indicates a score indicating a correlation (correlation score) that is with a darknet traffic observed by a darknet observing device and corresponds to an entry. This correlation score is calculated by the correlation score calculation program 110.

Note that the entries of the correlation score data 115 may be input or updated by the observer as needed.

The correlation score data 115 is used in the processing that the countermeasure priority score calculation program 112 performs to calculate a countermeasure priority score. Specific processing of the countermeasure priority score calculation program 112 is described later with reference to FIG. 12.

Next, countermeasure priority score presentation processing in the computer system 1 according to the embodiment is described.

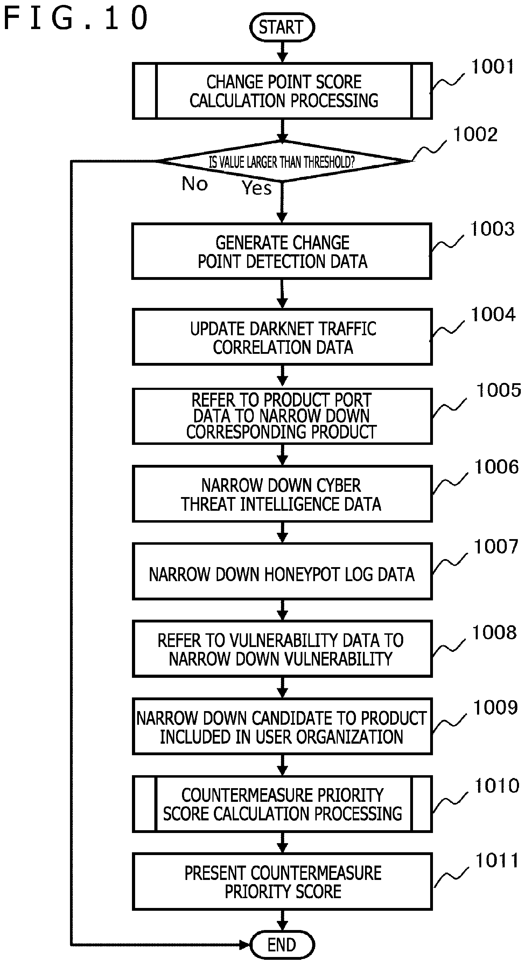

FIG. 10 is a flowchart of the countermeasure priority score presentation processing according to the embodiment.

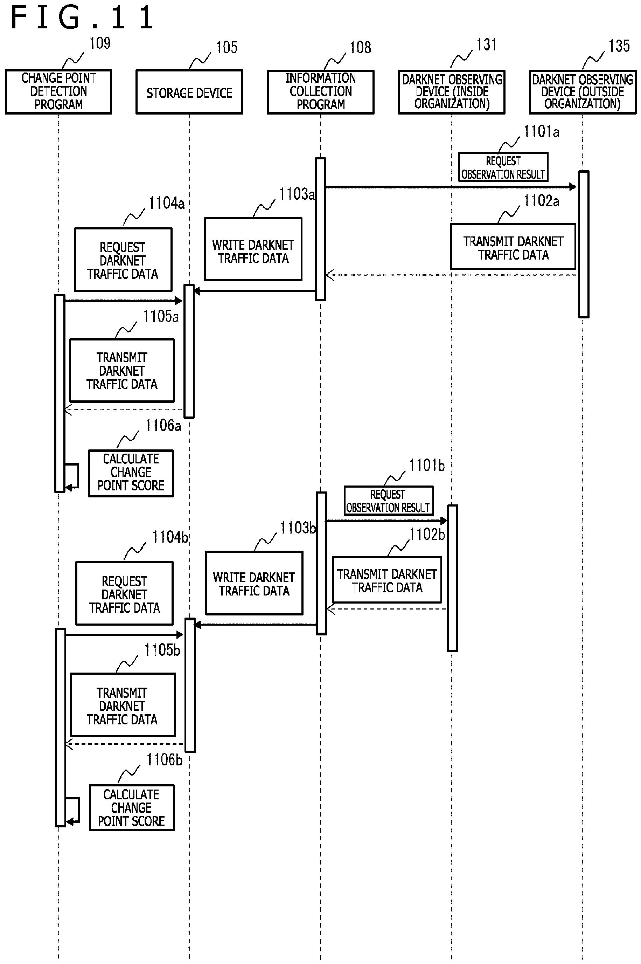

First, the change point detection program 109 (strictly speaking, the CPU 102 configured to execute the change point detection program 109) executes change point score calculation processing of calculating a change point score of a darknet traffic (see FIG. 11) (Step 1001) .

Next, the following processing in Step 1002 to Step 1011 is executed on each darknet traffic of which the change point score has been calculated in Step 1001.

The change point detection program 109 determines whether or not the change point score calculated in the change point score calculation processing is larger than a threshold set in advance (Step 1002).

In a case where it is determined that the change point score is not larger than the threshold (Step 1002: No), which means that the change point is not an increase point of the darknet traffic, the change point detection program 109 ends the processing.

Meanwhile, in a case where the change point score is larger than the threshold (Step 1002: Yes), the change point detection program 109 generates, on the basis of the darknet traffic data 114 having the change point score larger than the threshold, an entry of the change point detection data 122 and stores the entry in the storage device 105 (Step 1003).

Next, the change point detection program 109 starts the correlation score calculation program 110. The started correlation score calculation program 110 calculates a correlation score between the darknet traffic inside the user organization and the darknet traffic at an observation point of the generated entry of the change point detection data 122 (darknet observing device: referred to as subject observation point), and updates the correlation score of an entry of the correlation score data 115 that corresponds to the subject observation point to the calculated correlation score (Step 1004).

Specifically, the correlation score calculation program 110 calculates the correlation score with the following expression (1).

$$\mathtt{Correlation\ score\ =\ M/N\ \cdots\ (1)}$$

Here, N is the number of destination port/protocol unique values (values excluding duplicated values) detected at the subject observation point in the past (for example, within a past predetermined period (for example, one year)), and M is the number of destination port/protocol unique values common to destination port/protocol unique values detected inside the user organization in the past (for example, within a past predetermined period (for example, one year)) and the destination port/protocol unique values detected at the subject observation point in the past.

This correlation score indicates a correlation between the darknet traffic generated at the subject observation point and the darknet traffic generated in the user organization. A higher correlation score means a higher possibility that the user organization undergoes an attack same as that at the subject observation point.

Next, the data filtering program 111 checks the change point detection data 122 against the product port data 119 to narrow down the names of products assumed to be targets of the darknet traffic (Step 1005). Specifically, the data filtering program 111 checks the destination port/protocol 206 of the entry of the change point detection data 122 against the destination port/protocol 301 of the entry of the product port data 119.

Next, the data filtering program 111 checks the change point detection data 122 against the cyber threat intelligence data 117 to narrow down CVEs related to the darknet traffic (Step 1006). Specifically, the data filtering program 111 checks the destination port/protocol 206 of the entry of the change point detection data 122 against the destination port/protocol 504 of the entry of the cyber threat intelligence data 117, checks the transmission source IP 208 of the entry of the change point detection data 122 against the transmission source IP 503 of the entry of the cyber threat intelligence data 117, and/or checks the product name obtained in Step 1005 against the product name 502 of the entry of the cyber threat intelligence data 117.

Next, the data filtering program 111 checks the change point detection data 122 against the honeypot log data 116 to narrow down entries of the honeypot log data 116 (honeypot logs) that correspond to signs of attacks with respect to the increase point of the darknet traffic (Step 1007). Specifically, the data filtering program 111 checks the destination port/protocol 206 of the entry of the change point detection data 122 against the destination port/protocol 403 of the entry of the honeypot log data 116, and/or checks the transmission source IP 208 of the entry of the change point detection data 122 against the transmission source IP 404 of the entry of the honeypot log data 116. Note that entries of the honeypot log data 116 that have the attack name 405 unknown are excluded from the entries to be narrowed down.

Next, the data filtering program 111 checks the change point detection data 122 against the vulnerability data 118 to narrow down entries of the vulnerability data 118 that correspond to a product that is an access target at the increase point (Step 1008). Specifically, the data filtering program 111 checks the product name obtained in Step 1005 against the product name 604 of the entry of the vulnerability data 118.

Next, the data filtering program 111 checks the change point detection data 122 against the configuration data 120 to narrow down products having vulnerability in the user organization (Step 1009). Specifically, the data filtering program 111 checks the combination of the product name 604 and the corresponding version 605 of the entry obtained in Step 1008 against the combination of the product name 701 and the version 702 of the entry of the vulnerability data 118.

Next, the countermeasure priority score calculation program 112 receives the result of the processing in Step 1003 to Step 1009 to execute the countermeasure priority score calculation processing of calculating a countermeasure priority score (see FIG. 12) (Step 1010).

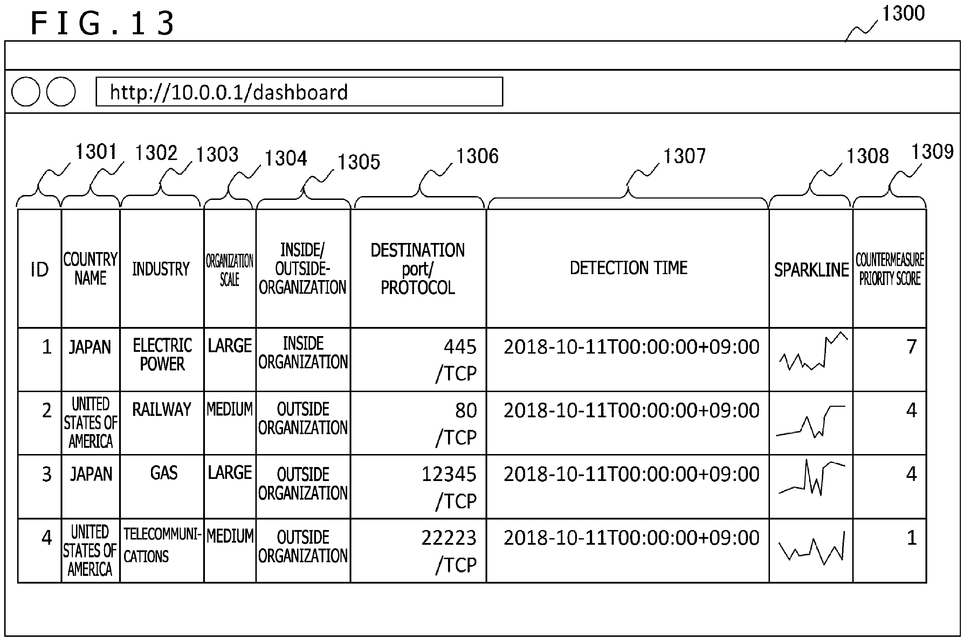

Next, the countermeasure priority score presentation program 113 receives the result of the countermeasure priority score calculation processing, displays a countermeasure priority score presentation screen 1300 (see FIG. 13) including information regarding the countermeasure priority score on the input/output device 106 or the like (Step 1011), and ends the processing.

Next, the change point score calculation processing (Step 1001) is described in detail.

FIG. 11 is a sequence diagram of the change point score calculation processing according to the embodiment.

First, the information collection program 108 (strictly speaking, the CPU 102 configured to execute the information collection program 108) transmits, to the darknet observing device 135 outside the organization, a transmission request for an observation result (observation result request) (Step 1101a). Next, when receiving the observation result request, the darknet observing device 135 transmits, to the information collection program 108, darknet traffic data that the darknet observing device 135 has observed (Step 1102a). Next, the information collection program 108 writes the darknet traffic data received from the darknet observing device 135 to the storage device 105 (Step 1103a).

Next, the change point detection program 109 sends, to the storage device 105, a transmission request for the darknet traffic data (Step 1104a). Next, the storage device 105 that has received the transmission request transmits the recorded darknet traffic data to the change point detection program 109 (Step 1105a).

Next, the change point detection program 109 aggregates the received darknet traffic data by destination port/protocol and calculates a change point score that is an index indicating a difference between the aggregate result and past data (Step 1106a). Here, the change point score may be, for example, the ratio of the current aggregate result (aggregate number) to the aggregate result (aggregate number) of the past data.

Next, on the darknet observing device 131 inside the organization, processing (Step 1101b to 1106b) similar to the processing (Step 1101a to 1106a) starting from the processing on the darknet observing device 135 outside the organization is performed.

Next, the countermeasure priority score calculation processing (Step 1011) is described in detail.

FIG. 12 is a flowchart of the countermeasure priority score calculation processing according to the embodiment.

The countermeasure priority score calculation program 112 executes the countermeasure priority score calculation processing on each entry of the change point detection data 122. Here, an entry of the change point detection data 122 that is subjected to the processing is referred to as a subject entry.

First, the countermeasure priority score calculation program 112 (strictly speaking, the CPU 102 configured to execute the countermeasure priority score calculation program 112) determines whether the inside/outside-organization 205 of the subject entry indicates inside or outside the organization (Step 1202). In a case where it is determined that the inside/outsideorganization 205 indicates inside the organization (Step 1202: Yes), the countermeasure priority score calculation program 112 increments (by 1) a score of an in-user organization darknet index indicating an access to the darknet inside the organization, increments (for example, by 1) the countermeasure priority score for the subject entry (Step 1201a), and brings the processing to Step 1203. Meanwhile, in a case where it is determined that the inside/outside-organization 205 does not indicate inside the organization (Step 1202: No), the countermeasure priority score calculation program 112 brings the processing to Step 1203.

In Step 1203, the countermeasure priority score calculation program 112 determines whether or not the correlation score 904 of an entry of the correlation score data 115 that corresponds to the subject entry is equal to or more than a predetermined threshold set in advance. In a case where it is determined that the correlation score 904 is equal to or more than the threshold (Step 1203: Yes), the countermeasure priority score calculation program 112 increments (for example, by 1) a score of a correlation index indicating that the correlation score is equal to or more than the threshold, increments (for example, by 1) the countermeasure priority score for the subject entry (Step 1201b), and brings the processing to Step 1204. Meanwhile, in a case where the correlation score 904 is not equal to or more than the threshold (Step 1203: No), the countermeasure priority score calculation program 112 brings the processing to Step 1204.

In Step 1204, the countermeasure priority score calculation program 112 determines whether or not the transmission source IP 208 of the subject entry is included in the IP address 801 of the entry of the IP blacklist data 121. In a case where it is determined that the transmission source IP 208 is included in the IP address 801 (Step 1204: Yes), the countermeasure priority score calculation program 112 increments (for example, by 1) a score of an IP blacklist index indicating that the transmission source IP is included in the IP blacklist, increments (for example, by 1) the countermeasure priority score for the subject entry (Step 1201c), and brings the processing to Step 1205. Meanwhile, in a case where the transmission source IP 208 is not included in the IP address 801 (Step 1204: No), the countermeasure priority score calculation program 112 brings the processing to Step 1205.

In Step 1205, the countermeasure priority score calculation program 112 determines whether or not, as a result of narrowing down in Step 1006, there is an entry of the cyber threat intelligence data 117 that corresponds to the subject entry. In a case where it is determined that there is a relevant entry of the cyber threat intelligence data 117 (Step 1205: Yes), the countermeasure priority score calculation program 112 increments (for example, by 1) a score of a threat intelligence index indicating that there is an entry of the cyber threat intelligence, increments (for example, by 1) the countermeasure priority score for the subject entry (Step 1201d), and brings the processing to Step 1206. Meanwhile, in a case where there is no relevant entry of the cyber threat intelligence data (Step 1205: No), the countermeasure priority score calculation program 112 brings the processing to Step 1206.

In Step 1206, the countermeasure priority score calculation program 112 determines, on the basis of the result of narrowing down in Step 1007, whether or not there is an entry of the honeypot log data 116 that is relevant to the subject entry. In a case where it is determined that there is a relevant entry of the honeypot log data 116 (Step 1206: Yes), the countermeasure priority score calculation program 112 increments (for example, by 1) a score of a honeypot index indicating that there is a relevant entry of the honeypot log data, increments (for example, by 1) the countermeasure priority score for the subject entry (Step 1201e), and brings the processing to Step 1207. Meanwhile, in a case where there is no relevant entry of the honeypot log data (Step 1206: No), the countermeasure priority score calculation program 112 brings the processing to Step 1208.

In Step 1207, the countermeasure priority score calculation program 112 determines whether or not the entry of the honeypot log data 116 that is relevant to the subject entry is data of the honeypot 132 inside the user organization. In a case where it is determined that the relevant entry of the honeypot log data 116 is the data of the honeypot 132 inside the user organization (Step 1207: Yes), the countermeasure priority score calculation program 112 increments (for example, by 1) a score of an in-user organization honeypot index indicating that the relevant entry of the honeypot log data is the data of the honeypot 132 inside the user organization, increments (for example, by 1) the countermeasure priority score for the subject entry (Step 1201f), and brings the processing to Step 1208. Meanwhile, in a case where the relevant entry of the honeypot log data is not the data of the honeypot 132 inside the user organization (Step 1207: No), the countermeasure priority score calculation program 112 brings the processing to Step 1208.

In Step 1208, the countermeasure priority score calculation program 112 determines whether or not the CVSS score 602 of an entry of the vulnerability data 118 that is relevant to the subject entry is equal to or more than a threshold set in advance. In a case where it is determined that the CVSS score 602 is equal to or more than the threshold (Step 1208: Yes), the countermeasure priority score calculation program 112 increments (for example, by 1) a score of a CVSS index indicating that the CVSS score is equal to or more than the threshold, increments (for example, by 1) the countermeasure priority score for the subject entry (Step 1201g), and brings the processing to Step 1209. Meanwhile, in a case where the CVSS score 602 is not equal to or more than the threshold (Step 1208: No), the countermeasure priority score calculation program 112 brings the processing to Step 1209.

In Step 1209, the countermeasure priority score calculation program 112 determines, on the basis of the result of narrowing down in Step 1009, whether or not there is a product having vulnerability inside the user organization. In a case where it is determined that there is a product having vulnerability inside the user organization (Step 1209: Yes), the countermeasure priority score calculation program 112 increments (for example, by 1) a score of a configuration information index indicating that there is a product having vulnerability inside the user organization, increments (for example, by 1) the countermeasure priority score for the subject entry (Step 1201h), and ends the processing. Meanwhile, in a case where there is no product having vulnerability inside the user organization (Step 1209: No), the countermeasure priority score calculation program 112 ends the processing.

With this countermeasure priority score calculation processing, a countermeasure priority score for an event (attack or attack sign) corresponding to each entry of the change point detection data 122 can be appropriately calculated.

Next, the countermeasure priority score presentation screen 1300 is described.

FIG. 13 is a diagram illustrating an example of the countermeasure priority score presentation screen according to the embodiment.

On the countermeasure priority score presentation screen 1300, there are displayed an ID 1301, a country name 1302, an industry 1303, an organization scale 1304, inside/outside-organization 1305, a destination port/protocol 1306, a detection time 1307, a sparkline 1308, and a correspondence priority score 1309 for each event (attack or attack sign) indicating detection of a change point of a darknet traffic.

The ID 1301, the country name 1302, the industry 1303, the organization scale 1304, the inside/outsideorganization 1305, the destination port/protocol 1306, and the detection time 1307 correspond to the ID 201, the country name 202, the industry 203, the organization scale 204, the inside/outside-organization 205, the destination port/protocol 206, and the detection time 207 of an entry of the change point detection data 122 that corresponds to the event in question, respectively. The sparkline 1308 is a graph (for example, line graph) of transition of an observed darknet traffic corresponding to an entry. The correspondence priority score 1309 indicates a countermeasure priority score calculated for the event of an entry by the countermeasure priority score calculation processing.

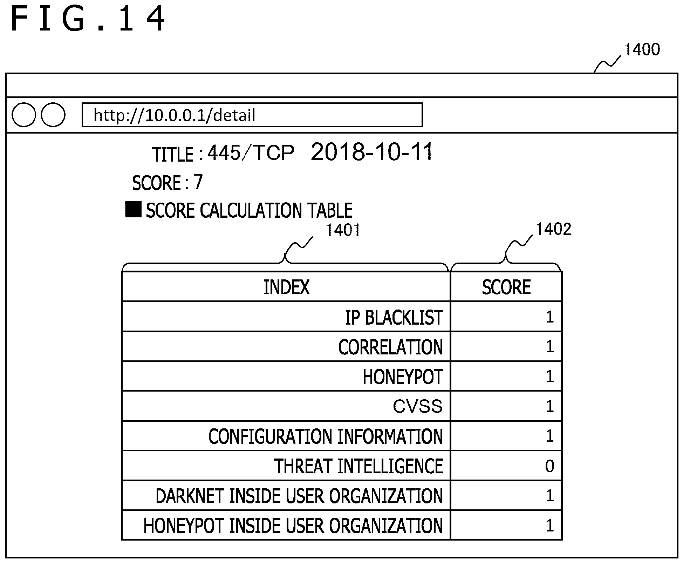

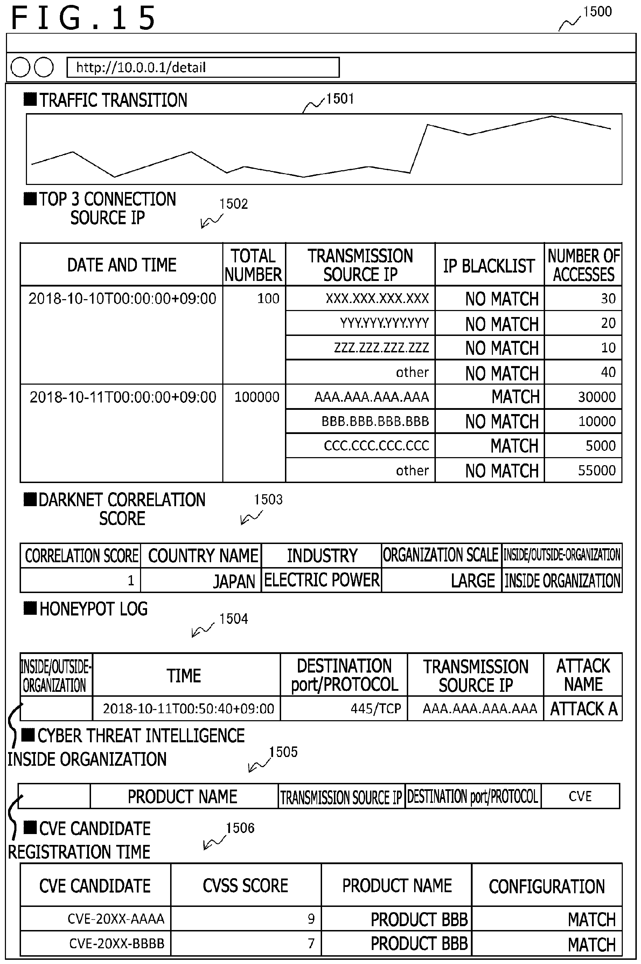

On the countermeasure priority score presentation screen 1300, when selection operation (for example, click operation with use of a mouse of the input/output device 106) is performed on the displayed countermeasure priority score 1309, a score details screen 1400 (see FIG. 14) or a detailed information presentation screen 1500 (see FIG. 15) can further be displayed.

With the countermeasure priority score presentation screen 1300, the observer can easily recognize a countermeasure priority score for each event indicating detection of a change point and appropriately determine which event is to be dealt with first.

Next, the score details screen 1400 is described.

FIG. 14 is a diagram illustrating an example of the score details screen according to the embodiment.

The score details screen 1400 is a screen for displaying details of the countermeasure priority score for an event selected by selection operation performed on the countermeasure priority score presentation screen 1300. On the score details screen 1400, an index 1401 and a score 1402 are displayed. The index 1401 indicates each index for calculating a countermeasure priority score. The score 1402 indicates a score for each index 1401.

With the score details screen 1400, a score for each index corresponding to the details of a countermeasure priority score can be confirmed.

Next, the detailed information presentation screen 1500 is described.

FIG. 15 is a diagram illustrating an example of the detailed information presentation screen according to the embodiment.

On the detailed information presentation screen 1500, there are displayed traffic transition 1501, a top connection source IP 1502, a darknet correlation score 1503, a honeypot log 1504, cyber threat intelligence 1505, and a CVE candidate 1506.

The traffic transition 1501 is a selected event-related graph indicating transition of an observed darknet traffic. The top connection source IP 1502 indicates selected event-related information regarding IP addresses of transmission sources that have made accesses more than others. The top connection source IP 1502 includes information regarding, for example, a date and time, a total number, a transmission source IP, an IP blacklist, and the number of accesses. The date and time indicates a time at which aggregation of the number of accesses starts. The total number indicates the total number of observed darknet traffics. The transmission source IP indicates an IP address of a transmission source. The IP blacklist indicates information regarding whether or not a transmission source IP has been registered in the IP blacklist data 121. The number of accesses indicates the number of traffics of each transmission source IP.

The darknet correlation score 1503 indicates information regarding a correlation score of a selected event. The information regarding a correlation score may include information included in the entry of the correlation score data 115 and the inside/outsideorganization 205 of an entry of the change point detection data 122 that corresponds to an event. The honeypot log 1504 indicates a log of a honeypot corresponding to a selected event. The log of the honeypot is similar to the information included in the entry of the honeypot log data 116. The cyber threat intelligence 1505 indicates information regarding cyber threat intelligence corresponding to a selected event. The information regarding cyber threat intelligence is similar to the information included in the entry of the cyber threat intelligence data 117. The CVE candidate 1506 indicates information regarding a CVE candidate corresponding to a selected attack. The CVE candidate 1506 includes information included in the entry of the vulnerability data 118 and information indicating whether or not a configuration corresponding to a CVE is included in the user organization.

Next, the processing illustrated in FIG. 10 to FIG. 12 are described with specific examples.

For example, in a case where the number of accesses to the port 445/TCP of the darknet observing device 131 inside the organization suddenly changes and a change point score calculated in the processing in Step 1001 thus takes a value equal to or more than the threshold, in Step 1003, an entry having the ID 201 = "1" of the change point detection data 122 of FIG. 2 is generated. Now, the subsequent processing in the case where the entry having the ID 201 = "1" of the change point detection data 122 is generated is described.

In Step 1004, with regard to the entry having the ID 201 = "1" of the change point detection data 122, the correlation score is 1 since the observation point at which the change point has been detected is located in the user organization.

In Step 1005, "445/TCP" of the destination port/protocol 206 of the entry having the ID 201 = "1" of the change point detection data 122 is checked against the port/protocol 301 of the entry of the product port data 119. As a result, candidates of the product name 302 are narrowed down to two "product AAA" and "product BBB."

In Step 1006, the product name 502, the transmission source IP 503, and the destination port/protocol 504 of the cyber threat intelligence data 117 are checked against the product name 302 = "product AAA" and "product BBB" obtained in Step 1005, the transmission source IP 208 = "AAA.AAA.AAA.AAA," "BBB.BBB.BBB.BBB," and "CCC.CCC.CCC.CCC" of the entry of the change point detection data 122, and the destination port/protocol 206 = "445/TCP" thereof, respectively or in combination. As a result, there is no match, and nothing is thus extracted in this example.

In Step 1007, the destination port/protocol 403 and the transmission source IP 404 of the entry of the honeypot log data 116 are checked against the transmission source IP 208 = "AAA.AAA.AAA.AAA," "BBB.BBB.BBB.BBB," and "CCC.CCC.CCC.CCC" and the destination port/protocol 206 = "445/TCP" of the entry of the change point detection data 122, respectively or in combination. As a result, from the honeypot log data 116, an entry having "attack A" as the attack name 405 is extracted.

In Step 1008, the product name 604 of the entry of the vulnerability data 118 is checked against the product name 302 = "product AAA" and "product BBB" obtained in Step 1005. As a result, two entries having "CVE-20XX-AAAA" and "CVD-20XX-BBBB" as the CVE 601 are extracted.

In Step 1009, the combination of the product name 701 and the version 702 of the entry of the configuration data 120 is checked against the combination of the product name 604 = "product BBB" and the corresponding version 605 = "1.X" and "2.X" of the entry extracted in Step 1008. As a result, an entry of the configuration data 120 that has "product BBB" as the product name 701 is extracted.

Next, in Step 1010, the countermeasure priority score calculation processing (FIG. 12) is executed. In Step 1202, true (Yes) is determined for the entry having the ID 201 = "1" of the change point detection data 122 since the entry corresponds to an event detected by the darknet observing device 131 inside the user organization, and the countermeasure priority score is incremented in Step 1201a.

Next, in Step 1203, in a case where the correlation score is 1 and the threshold of the correlation score is set to 0.8, for example, true (Yes) is determined since the correlation score is equal to or more than the threshold, and the countermeasure priority score is incremented in Step 1201b.

Next, in Step 1204, true (Yes) is determined since the connection source IP 208 = "AAA.AAA.AAA.AAA" and "BBB.BBB.BBB.BBB" of the entry having the ID 201 = "1" of the change point detection data 122 is included in the IP address 801, and the countermeasure priority score is incremented in Step 1201c.

Next, in Step 1205, false (No) is determined since no entry of the threat intelligence data has been extracted in Step 1006, and the processing proceeds to Step 1206 without performing Step 1201d.

Next, in Step 1206, true (Yes) is determined since the entry having the attack name 405 = "attack A" of the honeypot log data 116 has been extracted in Step 1007, and the countermeasure priority score is incremented in Step 1201e.

Next, in Step 1207, true (Yes) is determined since the extracted entry of the honeypot log data 116 has the inside/outside-organization 401 = "inside organization," and the countermeasure priority score is incremented in Step 1201f.

Next, in Step 1208, in a case where the CVE 601 = "CVE-20XX-AAAA" of the entry extracted in Step 1008 is 9 and the threshold of the CVSS score is set to 8, for example, true (Yes) is determined since the CVSS score is equal to or more than the threshold, and the countermeasure priority score is incremented in Step 1201g.

Next, in Step 1209, true (Yes) is determined since there is an entry of the configuration data 120 that corresponds to the product name 604 = "product BBB" and the corresponding version 605 = "1.X" and indicates a product having vulnerability, that is, there is a product having vulnerability inside the user organization, and the countermeasure priority score is incremented in Step 1201h. As a result, the countermeasure priority score takes 7. With this, the countermeasure priority score calculation processing ends.

Next, in Step 1011, the countermeasure priority score presentation screen 1300 including the countermeasure priority score is presented. In Step 1011, on the countermeasure priority score presentation screen 1300, a row having the ID 1301 = "1" is newly added.

When a region of the countermeasure priority score presentation screen 1300 in which the countermeasure priority score in the row having the ID 1301 = "1" is displayed is selected, the score details screen 1400 and the detailed information presentation screen 1500 are presented.

On the detailed information presentation screen 1500, the transition of a traffic to a destination port/protocol in which a change point has been detected, the number of accesses of each transmission source IP, a darknet correlation score with the user organization, a relevant honeypot log, relevant cyber threat intelligence, and a relevant CVE are presented as a list. Note that, in this example, there is no relevant cyber threat intelligence, and no value is thus displayed.

Note that, in a case where a change point has been detected by the darknet observing device 135 outside the organization, processing similar to that in the above-mentioned case where a change point is detected by the darknet observing device 131 inside the organization is performed.

Here, the processing of updating darknet traffic correlation data in Step 1004 in processing on the darknet observing device 135 outside the organization is described by taking, as an example, a case where a darknet traffic to a destination port/protocol = "80/TCP" increases and the change point score takes a value equal to or more than the threshold. Note that, at the observation point of the darknet traffic, the country 202 is "the United States of America," the industry 203 is "railway," and the organization scale 205 is "medium." Further, at the observation point, destination ports/protocols with which changes have been detected in the past year, for example, are "23/TCP, 445/TCP, 7001/TCP, and 12345/TCP."

In this example, a list including, in addition to the destination ports/protocols with which changes have been detected in the past year, "80/TCP" detected this time is the detection list at the observation point. Thus, the element number N is "5." Further, the element number M is "2" in a case where destination ports/protocols detected by both the user organization and another organization in the past year are "23/TCP and 445/TCP." With this, a correlation score between the observation point and the user organization is calculated as 0.4 from Expression (1).

Note that the present invention is not limited to the embodiment described above and can be implemented with components modified without departing from the gist of the present invention. Further, the plurality of components disclosed in the embodiment described above can be appropriately combined to provide various inventions. For example, some of the components described in the embodiment may be omitted. Moreover, the components of different embodiments may be appropriately combined.

For example, in the embodiment described above, a countermeasure priority score is calculated on the basis of determinations with the eight conditions in Step 1202 to Step 1209, but the present invention is not limited thereto. A countermeasure priority score may be calculated using one or more of these conditions. Further, in the embodiment described above, a countermeasure priority score is incremented by the same value when a single condition is satisfied, but the present invention is not limited thereto. A countermeasure priority score may be incremented by different values depending on the conditions.

Further, in the embodiment described above, the aggregation of darknet traffic data is performed in units of port and protocol to detect an increase point, but the present invention is not limited thereto. For example, the aggregation of darknet traffic data may be performed in units of port or IP address.

Reference Signs List

    1: Computer system
    100: Network monitoring device
    102: CPU
    104: Main memory
    105: Storage device
    131, 135: Darknet observing device
    132, 136: Honeypot

## Claims

1. A network monitoring device comprising a processor unit and configured to monitor a cyberattack on a network, the processor unit being configured to

    detect an increase point of a darknet traffic on the network, and
    calculate, with regard to a darknet traffic corresponding to the detected increase point, an evaluation value indicating priority of a countermeasure against a cyberattack based on whether or not one or more of following conditions are met:

        the darknet traffic has been detected inside a user organization that is an organization to which the network monitoring device belongs;
        a correlation score indicating relevance of a darknet traffic between an observation point at which the darknet traffic corresponding to the increase point has been observed and the user organization is equal to or more than a threshold;
        a transmission source IP address is included in a blacklist;
        the darknet traffic is included in threat intelligence as attack information;
        a log corresponding to the darknet traffic is included in a honeypot configured to respond to an access;
        the honeypot including the log is a honeypot inside the user organization;
        a CVSS score of vulnerability of a target of the darknet traffic is equal to or more than a threshold; and
        there is a product having vulnerability as the target inside the user organization.

2. The network monitoring device according to claim 1, wherein the processor unit is configured to calculate the evaluation value based on whether or not a plurality of the conditions are met.

3. The network monitoring device according to claim 1, wherein the processor unit is configured to calculate the evaluation value based on whether or not the one or more conditions including that the correlation score is equal to or more than the threshold are met.

4. The network monitoring device according to claim 3, wherein the processor unit is configured to calculate the correlation score based on the number of types of targets detected both at the observation point of the darknet traffic corresponding to the increase point and inside the user organization in comparison with the number of types of past targets at the observation point.

5. The network monitoring device according to claim 1, wherein the processor unit is configured to calculate the evaluation value based on whether or not the one or more conditions including that the darknet traffic is detected inside the user organization are met.

6. The network monitoring device according to claim 1, wherein the processor unit is configured to calculate the evaluation value based on whether or not a plurality of the conditions including that the CVSS score of vulnerability is equal to or more than the threshold and that there is a product having vulnerability inside the user organization are met.

7. The network monitoring device according to claim 1, wherein the processor unit is configured to

detect an increase point of a darknet traffic to each port, and
calculate the evaluation value based on whether or not the darknet traffic to each port meets the one or more conditions.

8. The network monitoring device according to claim 1, wherein the processor unit is configured to cause the calculated evaluation value to be displayed.

9. The network monitoring device according to claim 8, wherein the processor unit is configured to cause information indicating details of the evaluation value to be displayed.

10. The network monitoring device according to claim 8, wherein the processor unit is configured to cause information regarding a transmission source of the darknet traffic to be displayed.

11. The network monitoring device according to claim 1, wherein the processor unit is configured to calculate the evaluation value based on all of the plurality of conditions.

12. A network monitoring method performed by a network monitoring device configured to monitor a cyberattack on a network,
the network monitoring method comprising:

detecting an increase point of a darknet traffic on the network; and
calculating, with regard to a darknet traffic corresponding to the detected increase point, an evaluation value indicating priority of a countermeasure against a cyberattack based on whether or not one or more of the following conditions is met:

the darknet traffic has been detected inside a user organization that is an organization to which the network monitoring device belongs;
a correlation score indicating relevance of a darknet traffic between an observation point at which the darknet traffic corresponding to the increase point has been observed and the user organization is equal to or more than a threshold;
a transmission source IP address is included in a blacklist;
the darknet traffic is included in threat intelligence as attack information;
a log corresponding to the darknet traffic is included in a honeypot configured to respond to an access;
the honeypot including the log is a honeypot inside the user organization;
a CVSS score of vulnerability of an attack target of the darknet traffic is equal to or more than a threshold; and
there is a product having vulnerability as the target inside the user organization.

13. A storage medium having recorded thereon a network monitoring program that is executed by a computer including a processor unit and configured to monitor a cyberattack on a network,

the network monitoring program causing the computer to
detect an increase point of a darknet traffic on the network, and

calculate, with regard to a darknet traffic corresponding to the detected increase point, an evaluation value indicating priority of a countermeasure against a cyberattack based on whether or not one or more of the following conditions is met:

the darknet traffic has been detected inside a user organization that is an organization to which a network monitoring device belongs;

a correlation score indicating relevance of a darknet traffic between an observation point at which the darknet traffic corresponding to the increase point has been observed and the user organization is equal to or more than a threshold;

a transmission source IP address is included in a blacklist;

the darknet traffic is included in threat intelligence as attack information;

a log corresponding to the darknet traffic is included in a honeypot configured to respond to an access;

the honeypot including the log is a honeypot inside the user organization;

a CVSS score of vulnerability of a target of the darknet traffic is equal to or more than a threshold; and

there is a product having vulnerability as the target inside the user organization.

# FIG.1

135 DARKNET OBSERVING DEVICE

136 HONEYPOT

134

133 INTERNET

OUTSIDE ORGANIZATION

INSIDE ORGANIZATION

130

132 HONEYPOT

131 DARKNET OBSERVING DEVICE

1

106 INPUT/OUTPUT DEVICE

100 NETWORK MONITORING DEVICE

103 INPUT/OUTPUT IF

101 COMMUNICATION IF

102 CPU

107

104 MAIN MEMORY

108 INFORMATION COLLECTION PROGRAM

109 CHANGE POINT DETECTION PROGRAM

110 CORRELATION SCORE CALCULATION PROGRAM

111 DATA FILTERING PROGRAM

112 COUNTERMEASURE PRIORITY SCORE CALCULATION PROGRAM

113 COUNTERMEASURE PRIORITY SCORE PRESENTATION PROGRAM

105 STORAGE DEVICE

114 DARKNET TRAFFIC DATA

115 CORRELATION SCORE DATA

116 HONEYPOT LOG DATA

117 CYBER THREAT INTELLIGENCE DATA

118 VULNERABILITY DATA

119 PRODUCT PORT DATA

120 CONFIGURATION DATA

121 IP BLACKLIST DATA

122 CHANGE POINT DETECTION DATA

# F I G . 2

122

| ID | COUNTRY NAME | INDUSTRY | ORGANIZATION SCALE | INSIDE/ OUTSIDE-ORGANIZATION | DESTINATION port/ PROTOCOL | DETECTION TIME | TRANSMISSION SOURCE IP |
|----|----|----|----|----|----|----|----|
| | 201 | 202 | 203 | 204 | 205 / 206 | 207 | 208 |
| 1 | JAPAN | ELECTRIC POWER | LARGE | INSIDE ORGANIZATION | 445/TCP | 2018-10-11T00:00:00+09:00 | AAA.AAA.AAA.AAA, BBB.BBB.BBB.BBB, CCC.CCC.CCC.CCC ... |
| 2 | UNITED STATES OF AMERICA | RAILWAY | MEDIUM | OUTSIDE ORGANIZATION | 80/TCP | 2018-10-11T00:00:00+09:00 | DDD.DDD.DDD.DDD, ... |
| 3 | JAPAN | GAS | LARGE | OUTSIDE ORGANIZATION | 12345/TCP | 2018-10-11T00:00:00+09:00 | EEE.EEE.EEE.EEE, FFF.FFF.FFF.FFF, ... |
| 4 | UNITED STATES OF AMERICA | TELECOMMUNI-CATIONS | MEDIUM | OUTSIDE ORGANIZATION | 22223/TCP | 2018-10-11T00:00:00+09:00 | GGG.GGG.GGG.GGG, HHH.HHH.HHH.HHH, ... |

# FIG.3

119

301 302

| port/PROTOCOL | PRODUCT NAME |
|---|---|
| 1/UDP | TCP Port Service Multiplexer (TCPMUX) |
| 1/TCP | TCP Port Service Multiplexer (TCPMUX) |
| ... | |
| 445/TCP | PRODUCT AAA |
| 445/TCP | PRODUCT BBB |
| ... | |
| 22223/nan | Nan |
| ... | |

FIG.4

116

| INSIDE/OUTSIDE-ORGANIZATION 401 | TIME 402 | DESTINATION port/PROTOCOL 403 | TRANSMISSION SOURCE IP 404 | ATTACK NAME 405 |
|---|---|---|---|---|
| INSIDE ORGANIZATION | 2018-10-11T00:50:40+09:00 | 445/TCP | AAA.AAA.AAA.AAA | ATTACK A |
| OUTSIDE ORGANIZATION | 2018-10-11T02:00:40+09:00 | 12345/TCP | EEE.EEE.EEE.EEE | ATTACK B |
| OUTSIDE ORGANIZATION | 2018-10-11T14:50:40+09:00 | 8888/TCP | KKK.KKK.KKK.KKK | ATTACK C |
| ... | | | | |

# FIG.5

| REGISTRATION TIME | PRODUCT NAME | TRANSMISSION SOURCE IP | DESTINATION port/PROTOCOL | CVE |
|---|---|---|---|---|
| 2018-10-10T13:50:40+09:00 | PRODUCT XXX | FFF.FFF.FFF.FFF, ... | 80/TCP | CVE-20XX-YYYY |
| 2018-10-10T14:50:40+09:00 | PRODUCT YYY | LLL.LLL.LLL.LLL, ... | 5000/TCP | CVE-20XX-ZZZZ |
| ... | | | | |

# FIG.6

118

| CVE 601 | CVSS SCORE 602 | REGISTRATION TIME 603 | PRODUCT NAME 604 | CORRESPONDING VERSION 605 |
|---|---|---|---|---|
| CVE-20XX-AAAA | 9 | 2018-08-01T15:50:40+09:00 | PRODUCT BBB | 1.X |
| CVE-20XX-BBBB | 7 | 2018-08-15T15:50:40+09:00 | PRODUCT BBB | 1.X |
| | | | | 2.X |
| CVE-20XX-YYYY | 5 | 2018-09-01T13:50:40+09:00 | PRODUCT XXX | 1.X |
| CVE-20XX-XXXX | 6 | 2018-10-01T13:50:40+09:00 | PRODUCT YYY | 1.X |
| CVE-20XX-ZZZZ | 5 | 2018-08-01T15:50:40+09:00 | PRODUCT ZZZ | 1.X |
| ... | | | | |

# FIG.7

120

701

702

| PRODUCT NAME | VERSION |
|---|---|
| PRODUCT BBB | 1.X |
| PRODUCT ZZZ | 2.X |
| ... | |

# FIG.8

| IP ADDRESS |
|---|
| AAA.AAA.AAA.AAA |
| BBB.BBB.BBB.BBB |
| ... |

FIG.9

_115

| COUNTRY NAME | INDUSTRY | ORGANIZATION SCALE | CORRELATION SCORE |
|---|---|---|---|
| JAPAN | ELECTRIC POWER | LARGE | 1 |
| JAPAN | GAS | LARGE | 0.8 |
| JAPAN | ELECTRIC POWER | MEDIUM | 0.75 |
| JAPAN | GAS | MEDIUM | 0.7 |
| UNITED STATES OF AMERICA | ELECTRIC POWER | LARGE | 0.8 |
| UNITED STATES OF AMERICA | ELECTRIC POWER | MEDIUM | 0.6 |
| UNITED STATES OF AMERICA | RAILWAY | MEDIUM | 0.4 |
| UNITED STATES OF AMERICA | TELECOMMUNICATIONS | MEDIUM | 0.25 |
| ... | | | |

901  902  903  904

# FIG.10

```
                    ( START )
                        |
                        v
        ┌──┌─────────────────────────┐      1001
        │  │  CHANGE POINT SCORE     │~~/
        │  │  CALCULATION PROCESSING │
        └──└─────────────────────────┘
                        |
                        v
              /─────────────────────\      1002
             <  IS VALUE LARGER THAN  >~~/
              \    THRESHOLD?        /
         No   └─────────┬───────────┘
                   Yes  |
                        v
            ┌─────────────────────────┐    1003
            │   GENERATE CHANGE        │~~/
            │   POINT DETECTION DATA   │
            └─────────────────────────┘
                        |
                        v
            ┌─────────────────────────┐    1004
            │   UPDATE DARKNET TRAFFIC │~~/
            │   CORRELATION DATA       │
            └─────────────────────────┘
                        |
                        v
            ┌─────────────────────────┐    1005
            │  REFER TO PRODUCT PORT   │~~/
            │  DATA TO NARROW DOWN     │
            │  CORRESPONDING PRODUCT   │
            └─────────────────────────┘
                        |
                        v
            ┌─────────────────────────┐    1006
            │   NARROW DOWN CYBER      │~~/
            │   THREAT INTELLIGENCE DATA │
            └─────────────────────────┘
                        |
                        v
            ┌─────────────────────────┐    1007
            │ NARROW DOWN HONEYPOT LOG DATA │~~/
            └─────────────────────────┘
                        |
                        v
            ┌─────────────────────────┐    1008
            │  REFER TO VULNERABILITY DATA TO │~~/
            │  NARROW DOWN VULNERABILITY │
            └─────────────────────────┘
                        |
                        v
            ┌─────────────────────────┐    1009
            │ NARROW DOWN CANDIDATE TO PRODUCT │~~/
            │ INCLUDED IN USER ORGANIZATION │
            └─────────────────────────┘
                        |
                        v
        ┌──┌─────────────────────────┐─┐    1010
        │  │ COUNTERMEASURE PRIORITY  │ │~~/
        │  │ SCORE CALCULATION PROCESSING │
        └──└─────────────────────────┘─┘
                        |
                        v
            ┌─────────────────────────┐    1011
            │  PRESENT COUNTERMEASURE  │~~/
            │  PRIORITY SCORE          │
            └─────────────────────────┘
                        |
                        v
                    (  END  )
```

# FIG.11

# FIG.12

```
                        START

   No      DETECTION BY DARKNET INSIDE USER          1202
                   ORGANIZATION
              Yes
             INCREMENT SCORE                          1201a

   No      IS CORRELATION SCORE                       1203
           EQUAL TO OR MORE THAN
                THRESHOLD?
              Yes
             INCREMENT SCORE                          1201b

   No      IS TRANSMISSION                            1204
           SOURCE IP INCLUDED
             IN IP BLACKLIST?
              Yes
             INCREMENT SCORE                          1201c

   No      IS ATTACK INFORMATION                      1205
           INCLUDED IN THREAT
               INTELLIGENCE?
              Yes
             INCREMENT SCORE                          1201d

   No      IS ATTACK LOG INCLUDED IN                  1206
                  HONEYPOT?
              Yes
             INCREMENT SCORE                          1201e

   No      DETECTION WITH HONEYPOT                    1207
           INSIDE USER ORGANIZATION
              Yes
             INCREMENT SCORE                          1201f

   No      IS CVSS SCORE EQUAL TO                     1208
           OR MORE THAN THRESHOLD?
              Yes
             INCREMENT SCORE                          1201g

   No      IS THERE PRODUCT HAVING                    1209
           VULNERABILITY INSIDE ORGANIZATION?
              Yes
             INCREMENT SCORE                          1201h

                         END
```

## F I G . 1 3

http://10.0.0.1/dashboard

| ID | COUNTRY NAME | INDUSTRY | ORGANIZATION SCALE | INSIDE/ OUTSIDE- ORGANIZATION | DESTINATION port/ PROTOCOL | DETECTION TIME | SPARKLINE | COUNTERMEASURE PRIORITY SCORE |
|---|---|---|---|---|---|---|---|---|
| 1 | JAPAN | ELECTRIC POWER | LARGE | INSIDE ORGANIZATION | 445 /TCP | 2018-10-11T00:00:00+09:00 | | 7 |
| 2 | UNITED STATES OF AMERICA | RAILWAY | MEDIUM | OUTSIDE ORGANIZATION | 80 /TCP | 2018-10-11T00:00:00+09:00 | | 4 |
| 3 | JAPAN | GAS | LARGE | OUTSIDE ORGANIZATION | 12345 /TCP | 2018-10-11T00:00:00+09:00 | | 4 |
| 4 | UNITED STATES OF AMERICA | TELECOMMUNI- CATIONS | MEDIUM | OUTSIDE ORGANIZATION | 22223 /TCP | 2018-10-11T00:00:00+09:00 | | 1 |

1301 1302 1303 1304 1305 1306 1307 1308 1309

# FIG.14

1400

http://10.0.0.1/detail

TITLE : 445／TCP  2018-10-11

SCORE : 7

■ SCORE CALCULATION TABLE

1401                    1402

| INDEX | SCORE |
|---|---|
| IP BLACKLIST | 1 |
| CORRELATION | 1 |
| HONEYPOT | 1 |
| CVSS | 1 |
| CONFIGURATION INFORMATION | 1 |
| THREAT INTELLIGENCE | 0 |
| DARKNET INSIDE USER ORGANIZATION | 1 |
| HONEYPOT INSIDE USER ORGANIZATION | 1 |

# FIG.15

1500

http://10.0.0.1/detail

■TRAFFIC TRANSITION 1501

■TOP 3 CONNECTION SOURCE IP 1502

| DATE AND TIME | TOTAL NUMBER | TRANSMISSION SOURCE IP | IP BLACKLIST | NUMBER OF ACCESSES |
|---|---|---|---|---|
| 2018-10-10T00:00:00+09:00 | 100 | XXX.XXX.XXX.XXX | NO MATCH | 30 |
| | | YYY.YYY.YYY.YYY | NO MATCH | 20 |
| | | ZZZ.ZZZ.ZZZ.ZZZ | NO MATCH | 10 |
| | | other | NO MATCH | 40 |
| 2018-10-11T00:00:00+09:00 | 100000 | AAA.AAA.AAA.AAA | MATCH | 30000 |
| | | BBB.BBB.BBB.BBB | NO MATCH | 10000 |
| | | CCC.CCC.CCC.CCC | MATCH | 5000 |
| | | other | NO MATCH | 55000 |

■DARKNET CORRELATION SCORE 1503

| CORRELATION SCORE | COUNTRY NAME | INDUSTRY | ORGANIZATION SCALE | INSIDE/OUTSIDE-ORGANIZATION |
|---|---|---|---|---|
| 1 | JAPAN | ELECTRIC POWER | LARGE | INSIDE ORGANIZATION |

■HONEYPOT LOG 1504

| INSIDE/OUTSIDE-ORGANIZATION | TIME | DESTINATION port/PROTOCOL | TRANSMISSION SOURCE IP | ATTACK NAME |
|---|---|---|---|---|
| | 2018-10-11T00:50:40+09:00 | 445/TCP | AAA.AAA.AAA.AAA | ATTACK A |

■CYBER THREAT INTELLIGENCE INSIDE ORGANIZATION 1505

| | PRODUCT NAME | TRANSMISSION SOURCE IP | DESTINATION port/PROTOCOL | CVE |
|---|---|---|---|---|

■CVE CANDIDATE REGISTRATION TIME 1506

| CVE CANDIDATE | CVSS SCORE | PRODUCT NAME | CONFIGURATION |
|---|---|---|---|
| CVE-20XX-AAAA | 9 | PRODUCT BBB | MATCH |
| CVE-20XX-BBBB | 7 | PRODUCT BBB | MATCH |

## INTERNATIONAL SEARCH REPORT

| International application No. |
|---|
| PCT/JP2020/028939 |

### A. CLASSIFICATION OF SUBJECT MATTER
H04L 12/70(2013.01)i; G06F 21/55(2013.01)i
FI: H04L12/70 100Z; G06F21/55 320

According to International Patent Classification (IPC) or to both national classification and IPC

### B. FIELDS SEARCHED

Minimum documentation searched (classification system followed by classification symbols)
H04L12/70; G06F21/55

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2018/0191765 A1 (KOREA INTERNET & SECURITY AGENCY) 05 July 2018 (2018-07-05) abstract, paragraph [0093] | 1-2,8-13 |
| Y | abstract, paragraph [0093] | 3,5,7 |
| A | | 4,6 |
| Y | WO 2018/143097 A1 (NIPPON TELEGRAPH AND TELEPHONE CORPORATION) 09 August 2018 (2018-08-09) paragraphs [0028]-[0029] | 3 |
| Y | US 2018/0083988 A1 (NTT INNOVATION INSTITUTE, INC.) 22 March 2018 (2018-03-22) paragraphs [0030]-[0058] | 5 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 October 2020 (22.10.2020) | 02 November 2020 (02.11.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/028939 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | 秋吉 亮, 小谷 大祐, 岡部 寿男, 低対話型ハニーポットとダークネットの関連付けによる新たなスキャン活動の検知手法の検討 "Investigation of A Method for Detecting New Scanning Activities by Correlating Low-Interaction Honeypots with Darknet", 電子情報通信学会技術研究報告 vol. 117 no. 294, 11 December 2017 (accession date), pp. 13-18, pp. 13-18, (AKIYOSHI, Makoto, KOTANI, Daisuke, OKABE, Yasuo, IEICE technical report vol. 117, no. 294) | 7 |
| A | US 2018/0032736 A1 (JPMORGAN CHASE BANK, N.A.) 01 February 2018 (2018-02-01) entire text, all drawings | 1-13 |

Form PCT/ISA/210 (continuation of second sheet) (January 2015)

**INTERNATIONAL SEARCH REPORT**
Information on patent family members

International application No.

PCT/JP2020/028939

| Patent Documents referred in the Report | Publication Date | Patent Family | Publication Date |
|---|---|---|---|
| US 2018/0191765 A1 | 05 Jul. 2018 | KR 10-1781450 B1 abstract, paragraph [0093] | |
| WO 2018/143097 A1 | 09 Aug. 2018 | US 2019/0370476 A1 paragraphs [0035]-[0036] | |
| US 2018/0083988 A1 | 22 Mar. 2018 | JP 2019-533856 A paragraphs [0018]-[0037] | |
| US 2018/0032736 A1 | 01 Feb. 2018 | WO 2018/023074 A1 entire text, all drawings CN 109690492 A entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018196054 A